(19) Europäisches Patentamt
European Patent Office
Office européen des brevets

(11) **EP 4 744 997 A1**

(12) **EUROPEAN PATENT APPLICATION**
published in accordance with Art. 153(4) EPC

(43) Date of publication:
**20.05.2026 Bulletin 2026/21**

(21) Application number: **24841975.6**

(22) Date of filing: **03.04.2024**

(51) International Patent Classification (IPC):
***B60W 50/14*** (2020.01)   ***B60W 50/08*** (2020.01)

(86) International application number:
**PCT/CN2024/085799**

(87) International publication number:
**WO 2025/015975 (23.01.2025 Gazette 2025/04)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.07.2023 CN 202310869724**

(71) Applicant: **BYD Company Limited**
**Shenzhen, Guangdong 518118 (CN)**

(72) Inventors:
• **ZHANG, Yunpeng**
**Shenzhen, Guangdong 518118 (CN)**

• **WANG, Chunsheng**
**Shenzhen, Guangdong 518118 (CN)**
• **XU, Boliang**
**Shenzhen, Guangdong 518118 (CN)**
• **LIU, Rujie**
**Shenzhen, Guangdong 518118 (CN)**
• **WANG, Jiquan**
**Shenzhen, Guangdong 518118 (CN)**

(74) Representative: **Mathys & Squire**
**32 London Bridge Street**
**The Shard**
**London SE1 9SG (GB)**

(54) **POWER STYLE ADJUSTMENT METHOD AND APPARATUS, AND COMPUTER DEVICE**

(57)   A power style adjustment method and apparatus, and a computer device relate to the field of vehicle technologies. The method includes: providing a power style adjustment interface, and displaying a power adjustment control on the power style adjustment interface; and displaying target power information through the power style adjustment interface in response to a power adjustment operation on the power adjustment control, where the target power information indicates a power output intensity of a vehicle.

FIG. 3

## Description

## CROSS-REFERENCE TO RELATED APPLICATIONS

The present disclosure claims priority to Chinese Patent Application No. 2023108697249, filed on July 14, 2023 and entitled "POWER STYLE ADJUSTMENT METHOD AND APPARATUS, COMPUTER DEVICE, AND STORAGE MEDIUM", which is incorporated herein by reference in its entirety.

## TECHNICAL FIELD

The present disclosure relates to the field of vehicle technologies, and specifically, to a power style adjustment method and apparatus, and a computer device.

## BACKGROUND

The design orientation of automotive products is always guided by user requirements. With the development of technologies such as automotive electronics, artificial intelligence, and connected vehicles, the value, experience, and functions that automobiles provide for users as industrial products are rapidly changing. Therefore, the automobiles are usually configured with a driving mode selection function.

In the related art, a hardware switch (such as a knob or a button) or a software switch (such as a central control touch switch) is usually provided to switch between fixed driving modes. A power style of a vehicle is adjusted by selecting different driving modes. However, the adjustment effect achieved by this power style adjustment manner needs to be improved.

## SUMMARY

In view of this, the present disclosure aims to provide a power style adjustment method and apparatus, and a computer device, to improve adjustment effect of a power style.

The present disclosure provides a power style adjustment method. The method includes: providing a power style adjustment interface, and displaying a power adjustment control on the power style adjustment interface; and displaying target power information through the power style adjustment interface in response to a power adjustment operation on the power adjustment control, where the target power information indicates a power output intensity of a vehicle.

The present disclosure provides a power style adjustment apparatus. The apparatus includes: an adjustment interface providing module, configured to provide a power style adjustment interface, and display a power adjustment control on the power style adjustment interface; and a power index adjustment module, configured to display target power information through the power style adjustment interface in response to a power adjustment operation on the power adjustment control, where the target power information indicates a power output intensity of a vehicle.

The present disclosure provides a computer device, including a memory and a processor. The memory stores a computer program, and when the computer program is executed by the processor, the power style adjustment method according to any one of the foregoing implementations is implemented.

The present disclosure provides a computer-readable storage medium. The computer-readable storage medium stores a computer program, and when the computer program is executed by a processor, the power style adjustment method according to any one of the foregoing implementations is implemented.

According to the power style adjustment method provided in the present disclosure, the power style adjustment interface is provided, the power adjustment control is displayed on the power style adjustment interface, and the target power information that indicates the power output intensity of the vehicle is displayed on the power style adjustment interface in response to the power adjustment operation on the power adjustment control. This can improve adjustment effect of a power style.

Additional aspects and advantages of the present disclosure are partially presented in the following descriptions, partially become clear in the following descriptions, or are learned of through practice of the present disclosure.

## BRIEF DESCRIPTION OF DRAWINGS

The above and/or additional aspects and advantages of the present disclosure will become apparent and easily understood from descriptions of embodiments with reference to the following drawings.

FIG. 1 is a diagram of a structure of a power style adjustment system according to an implementation of this specification;
FIG. 2 is a schematic flowchart of a power style adjustment method according to an implementation of this specification;
FIG. 3 to FIG. 11 are diagrams of power style adjustment interfaces according to an implementation of this specification;
FIG. 12 is a schematic flowchart of a power style adjustment method according to an implementation of this specification;
FIG. 13 is a diagram of control logic of a power style adjustment method according to an implementation of this specification;
FIG. 14 is a power saving mode throttle curve table according to an implementation of this specification;
FIG. 15 is a standard mode throttle curve table according to an implementation of this specification;

FIG. 16 is a sport mode throttle curve table according to an implementation of this specification;
FIG. 17 is a diagram of a power style adjustment apparatus according to an implementation of this specification; and
FIG. 18 is a diagram of a computer device according to an implementation of this specification.

## DESCRIPTION OF EMBODIMENTS

Embodiments of the present disclosure are described in detail below, examples of which are shown in the accompanying drawings, where the same or similar reference numerals represent the same or similar elements or elements having the same or similar functions throughout. Embodiments described below with reference to the accompanying drawings are examples and are used to explain the present disclosure, and should not be construed as limiting the present disclosure.

The design orientation of automotive products is always guided by user requirements. With the development of technologies such as automotive electronics, artificial intelligence, and connected vehicles, the value, experience, and functions that automobiles provide for users as industrial products are rapidly changing. Therefore, the automobiles are usually configured with a driving mode selection function.

In the related art, driving modes are generally classified into an economy mode, a standard mode, and a sport mode, namely, an eco mode, a normal mode, and a sport mode. Different driving modes correspond to different throttle curves. A throttle curve for a driving mode is fixed and set in a vehicle development phase. During vehicle traveling, the driving mode may be selected through a center console or a control panel in a driver's compartment of a vehicle, to determine a power style of the vehicle. The power style of the vehicle means a driving style of the vehicle or a power output intensity of the vehicle. During selection of the driving mode, a hardware switch (such as a knob or a button) or a software switch (such as a central control touch switch) is usually provided to switch between fixed driving modes, to adjust the power style of the vehicle. However, adjustment effects achieved by a power style adjustment manner in the related art needs to be improved, and an adjustment process provides limited selectivity and lacks personalization and adjustability, making it difficult to meet customized and diverse requirements of some current users.

Therefore, it is necessary to provide a power style adjustment method addressing varying requirements of user groups in vehicle power requirements and power styles, so that users can set the power style of the vehicle in a linear and adjustable manner based on preferences or requirements for the power style.

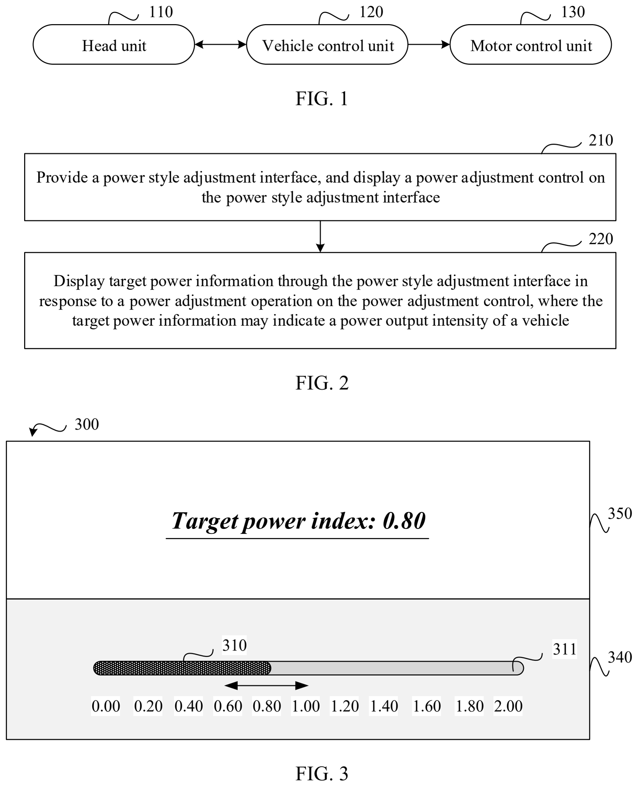

Referring to FIG. 1, an implementation of this specification provides a power style adjustment system. The power style adjustment system may include a vehicle control unit (VCU) 120 of a vehicle, and a head unit 110 and a motor control unit 130 (MCU) that are separately communicatively connected to the vehicle control unit 120, where the head unit 110 has a user interface (UI) for human-vehicle interaction. The vehicle control unit 120 may communicate with the head unit 110 and the motor control unit 130 through a controller area network (CAN) bus.

Specifically, a target power index may be linearly and continuously adjusted, displayed, and transmitted to the vehicle control unit 120 based on the user interface of the head unit 110, and the vehicle control unit 120 may determine a target required torque of the vehicle based on a throttle pedal opening, a vehicle speed, and the target power index, so that a smaller target required torque is determined when the target power index is smaller, and a larger target required torque is determined when the target power index is larger, thereby meeting a relationship in which the target power index indicates a power output intensity of the vehicle. The motor control unit 130 may be connected to a motor, and the motor control unit 130 may control the motor to output a torque based on the target required torque.

An implementation of this specification provides a power style adjustment method. FIG. 2 is a schematic flowchart of a power style adjustment method according to an implementation. This implementation provides operation steps of the method shown in the flowchart. However, routine or uncreative labor may include more or fewer operation steps. A sequence of steps listed in the implementation is merely one execution manner in a plurality of step execution sequences, and does not represent a unique execution sequence. In actual system or server product execution, steps can be performed in a sequence shown in the method in embodiments or in parallel (for example, in an environment using parallel processors or multi-thread processing). The power style adjustment method may be applied to a power style adjustment system. Specifically, as shown in FIG. 2, the power style adjustment method may include the following steps.

Step S210: provide a power style adjustment interface, and display a power adjustment control on the power style adjustment interface.

In some cases, the power style adjustment interface may be provided, and adjustment effect of a power style of a vehicle is improved by using the power adjustment control displayed on the power style adjustment interface.

In this implementation, referring to FIG. 3, a head unit may provide the power style adjustment interface 300 through a user interface, and display the power adjustment control on the power style adjustment interface 300, so that target power information can be adjusted by using the power adjustment control, and the power style of the vehicle may be adjusted based on the target power information.

Step S220: display the target power information through the power style adjustment interface in response to a power adjustment operation on the power adjustment control, where the target power information may indicate a power output intensity of the vehicle.

In this implementation, still referring to FIG. 3, in response to the power adjustment operation on the power adjustment control on the power style adjustment interface 300, the head unit may display the target power information that can indicate the power output intensity of the vehicle. Specifically, the power adjustment operation may be an operation of adjusting and setting the target power information through the power adjustment control on the power style adjustment interface 300, for example, may be a touch operation, or a gesture operation. The head unit may determine the target power information in response to the power adjustment operation, so that the power output intensity of the vehicle can be controlled based on the target power information. In addition, the target power information may be displayed on the power style adjustment interface 300, to prompt a user with a power output intensity of the vehicle indicated by current target power information.

In the foregoing implementation, the power style adjustment interface including the power adjustment control is displayed through the user interface, so that the target power information that indicates the power output intensity of the vehicle may be determined in response to the power adjustment operation on the power adjustment control, and the target power information may be displayed on the power style adjustment interface. This may help the user adjust the power output intensity of the vehicle, thereby improving the adjustment effect of the power style of the vehicle. In addition, the power style of the vehicle can be adjusted by using the power adjustment control displayed on the power style adjustment interface provided based on the user interface, without additional hardware investment, reducing adjustment costs of the power style of the vehicle.

In some implementations, the target power information may include: a target power index and/or a color indicator. That is, the power output intensity of the vehicle may be indicated by the target power index, the color indicator, or a combination of the target power index and the color indicator. In this way, when the power style of the vehicle is displayed on the power style adjustment interface, a numerical type target power index is displayed, so that display accuracy of the power output intensity can be improved, so that the user can clearly and distinctly understand a current power output intensity of the vehicle. In addition, the color indicator is displayed, so that display effect and interest can be improved when the power output intensity is displayed, thereby improving experience when the user adjusts the power style of the vehicle.

In some implementations, the target power index is continuously adjustable within a specified power index range. Specifically, the target power index may be continuously adjusted within the continuously adjustable specified power index range in response to the touch operation, the gesture operation, or the like on the power adjustment control, so that the target power index may be any power index within the specified power index range.

For example, the target power index may be continuously adjusted within the specified power index range, to control the power output intensity of the vehicle to be positively correlated to the target power index, that is, a smaller power output intensity of the vehicle indicates a smaller target power index, and a larger power output intensity of the vehicle indicates a larger target power index. The target power index may be any power index within the specified power index range.

For example, the specified power index range has corresponding index precision, and the target power index determined in response to the power adjustment operation may be any power index that meets the index precision within the specified power index range.

In the foregoing implementation, the target power index is continuously adjusted within the specified power index range, so that selectivity and adjustability of the power output intensity of the vehicle can be improved, matching between the power output intensity of the vehicle and a power requirement of the user is further improved, richer and more diverse power requirements of the users can be met, and the adjustment effect of the power style is improved. In addition, the continuously adjustable target power index is displayed on the power style adjustment interface, improving the adjustment effect and the display effect of the power style.

In some implementations, still referring to FIG. 3, the power adjustment control may be a sliding control 310. A length of the sliding control 310 corresponds to any power index within the specified power index range.

In some cases, the target power index may be determined by the power adjustment operation on the sliding control 310.

In this implementation, the head unit may display the target power index on the power style adjustment interface 300 in response to the touch operation on the sliding control 310. Specifically, the sliding control 310 may slide within a specified length range, where the specified length range corresponds to the specified power index range, and the length of the sliding control 310 changes during sliding. In response to the touch operation on the sliding control 310, the head unit may determine a length of the sliding control 310 within the specified length range, determine a corresponding target power index based on a correspondence between the length of the sliding control 310 and any power index within the specified power index range, and display the target power index on the power style adjustment interface 300.

For example, the sliding control 310 may be in a linear shape, an arc shape, or a combination of the linear shape and the arc shape. The sliding control 310 may be displayed horizontally or vertically on the power style adjustment interface 300.

For example, a specified power index range of 0.0 to 2.0 with index precision of 0.1 is used for description. The specified length range of the sliding control 310 corresponds to the specified power index range of 0.0 to 2.0. The length of the sliding control 310 corresponds to any power index within the specified power index range of 0.0 to 2.0. The head unit may determine the length of the sliding control 310 in response to the touch operation on the sliding control 310, and use a power index corresponding to the length of the sliding control 310 within the specified power index range as the target power index.

For example, the index precision of the specified power index range may alternatively be 0.01. It will be understood that the specified power index range and the index precision thereof may be determined based on an actual situation. This is not limited herein.

In the foregoing implementation, any length of the sliding control within the specified length range may be determined in response to the touch operation on the sliding control, so that any power index within the specified power index range may be used as the target power index based on any length of the sliding control, that is, the target power index is continuously adjustable or continuously settable within the specified power index range, so that the power output intensity or the power style of the vehicle determined based on the target power index is also continuously adjustable and settable. This can improve selectivity and adjustability of the power output intensity of the vehicle, improve matching between the power output intensity of the vehicle and the power requirement of the user, and further improve the adjustment effect of the power style.

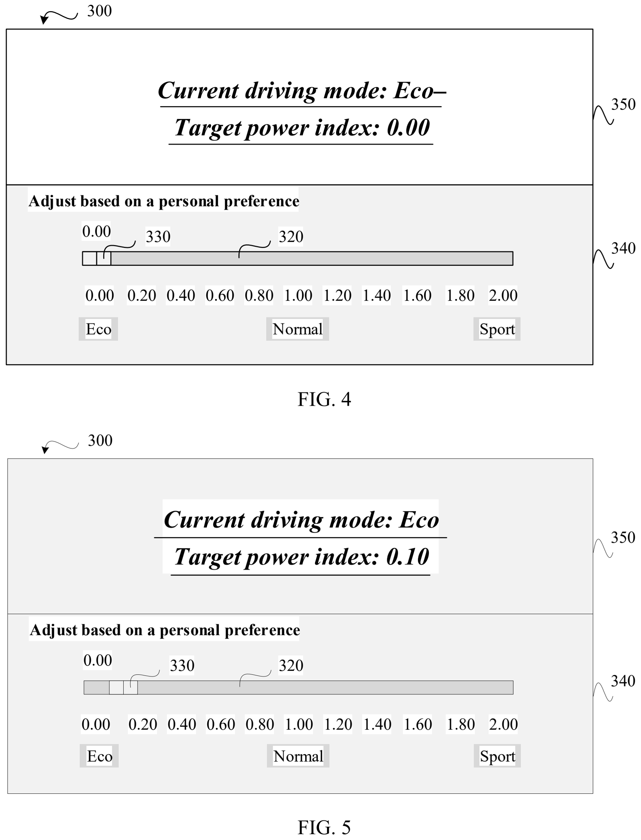

In some implementations, still referring to FIG. 4, the power adjustment control may include a sliding bar 320 and a slider 330. A position of the sliding bar 320 in a length direction corresponds to a power index within the specified power index range, and the slider 330 can point to any position of the sliding bar 320 in the length direction.

In this implementation, the power adjustment operation may be a relative movement operation between the sliding bar 320 and the slider 330, and the head unit may display the target power index on the power style adjustment interface 300 in response to the relative movement operation between the sliding bar 320 and the slider 330. The target power index is determined based on a position of the slider 330 relative to the sliding bar 320. Specifically, that the slider 330 can point to any position of the sliding bar 320 in the length direction may mean that the slider 330 may be located at any position of the sliding bar 320 in the length direction, and the head unit may determine the position of the slider 330 relative to the sliding bar 320 in response to the relative movement operation between the sliding bar 320 and the slider 330, determine the target power index based on a correspondence between the position of the slider and the power index within the specified power index range, and display the target power index on the power style adjustment interface 300.

For example, the sliding bar 320 may be in a linear shape, an arc shape, or a combination of the linear shape and an annular shape. The sliding bar 320 may be displayed horizontally or vertically on the power style adjustment interface 300.

For example, the relative movement operation between the sliding bar 320 and the slider 330 may be performed by keeping the slider 330 fixed and sliding or moving the sliding bar 320, or by keeping the sliding bar 320 fixed and sliding or moving the slider 330.

For example, a specified power index range of 0.00 to 2.00 with index precision of 0.01 is used for description. The head unit may determine the position of the slider in response to the relative movement operation between the sliding bar 320 and the slider 330, and determine the target power index based on a correspondence between the position of the slider and the power index within the specified power index range of 0.00 to 2.00. It should be noted that the specified power index range and the index precision thereof may be determined based on an actual situation. This is not limited herein.

In the foregoing implementation, the position of the slider relative to the sliding bar may be determined in response to the relative movement operation between the sliding bar and the slider, so that the target power index can be determined and displayed based on the position of the slider. The target power index determined based on any position of the sliding bar pointed by the position of the slider may be any power index that meets the index precision within the specified power index range, that is, the target power index is continuously adjustable within the specified power index range, so that the power output intensity of the vehicle determined based on the target power index is also continuously adjustable. This can improve selectivity and adjustability of the power output intensity of the vehicle, improve matching between the power output intensity of the vehicle and the power requirement of the user, and further improve the adjustment effect of the power style.

In some implementations, still referring to FIG. 4, the power style adjustment interface 300 may include a first area 340 and a second area 350. In this implementation, the power style adjustment method may further include: displaying the power adjustment control in the first area 340; and displaying the target power information in the second area 350. Specifically, the target power index may be displayed in the second area 350, or the color indicator may also be displayed in the second area 350.

In some implementations, different color indicators correspond to different target power indexes. That is, a power output intensity of the vehicle corresponding to the target power index may be indicated by the color indicator.

In some cases, the corresponding power output intensity of the vehicle may be determined based on the target power index, that is, the power output intensity of the vehicle may be positively correlated to the target power index. A smaller power output intensity of the vehicle indicates a smaller target power index, and a larger power output intensity of the vehicle indicates a larger target power index. Therefore, the different color indicators may be used to better distinguish and indicate power output intensities indicated by the different target power indexes.

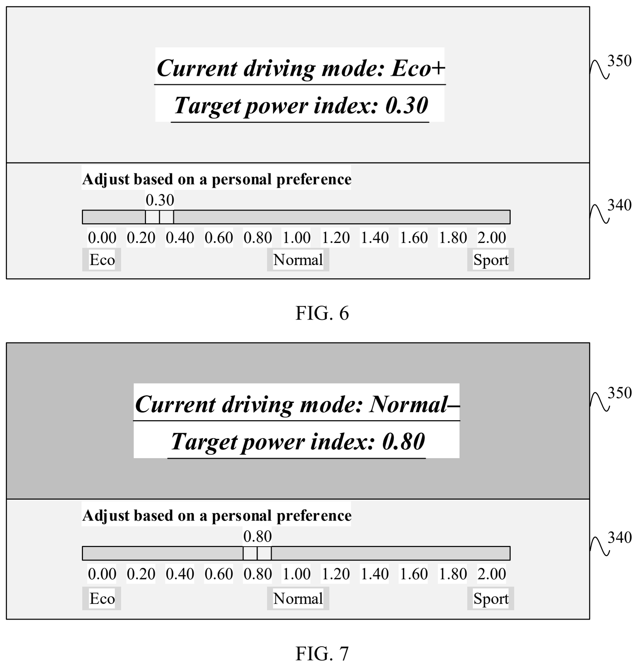

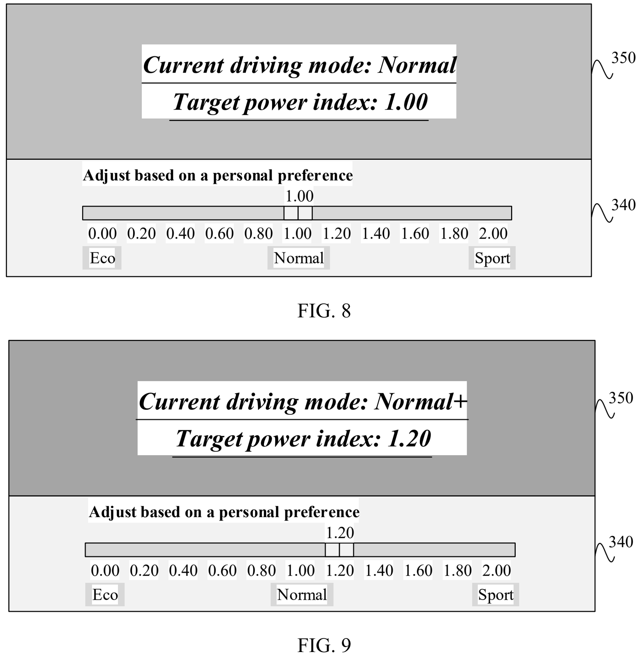

In this implementation, still referring to FIG. 4, the power style adjustment method may further include: displaying a color indicator corresponding to the target power index in the second area 350, to improve display effect during adjustment of the power style. For example, referring to FIG. 5 to FIG. 11, the color indicator of the target power index may be a background color indicator. For example, the color indicator may be a background color indicator of the second area 350 in which the target power index is displayed.

In an example, when the target power index value is small, the color indicator of the target power index may be a light background color; or when the target power index is large, the color indicator of the target power index may be a dark background color. In an example, when the target power index value is small, the color indicator of the target power index may be a green background color or a greenish background color; or when the target power index is large, the color indicator of the target power index may be a red background color or a reddish background color.

In the foregoing implementation, the different target power indexes are indicated by the different color indicators, and the color indicator corresponding to the target power index is displayed in the second area. This can render a driving scenario corresponding to the power output intensity of the vehicle indicated by the target power index, thereby improving the display effect of the power style.

In some implementations, the power style adjustment method may further include: as the target power index changes, displaying, in a gradient manner in the second area, a color indicator corresponding to a changed target power index.

In some cases, the target power index is continuously adjustable or continuously settable in response to the power adjustment operation.

In this implementation, still referring to FIG. 4 to FIG. 11, as the target power index changes, the head unit may display, in the gradient manner in the second area 350, the color indicator corresponding to the changed target power index. Specifically, in response to the power adjustment operation on the power adjustment control in the first area 340, the head unit may determine the target power index within the specified power index range, and as the target power index changes, the head unit may display, in the gradient manner in the second area 350, a background color corresponding to the changed target power index. This can further improve the display effect of the power style of the vehicle.

In some implementations, the power style adjustment method may further include: displaying, on the power style adjustment interface, a power indicator indicating the specified power index range.

In this implementation, to improve the adjustment effect of the power style, or to help the user adjust the power style of the vehicle, the power indicator indicating the specified power index range may be displayed on the power style adjustment interface 300. Specifically, the power indicator may be displayed in the first area 340. For example, still referring to FIG. 3, the power indicator may be an indicator 311 that can indicate the specified length range of the sliding control 310. For example, still referring to FIG. 4, the power indicator may be the sliding bar 320, and the specified power index range may be indicated by the length of the sliding bar 320.

In some implementations, the power indicator may include a plurality of power index indicators. The power index indicator is indicated in any one of the following manners: a numerical indicator corresponding to a designated power index; a symbol indicator corresponding to the designated power index; and a text indicator corresponding to the designated power index. Specifically, still referring to FIG. 3 to FIG. 11, the plurality of power index indicators may be displayed in the second area 340. For example, the plurality of power index indicators may be numerical indicators, namely, "0.00", "0.20", "0.40", "0.60", "0.80", "1.00", "1.20", "1.40", "1.60", "1.80", and "2.00" respectively corresponding to a plurality of designated power indexes, namely, 0.00, 0.20, 0.40, 0.60, 0.80, 1.00, 1.20, 1.40, 1.60, 1.80, and 2.00 within the specified power index range of 0.00 to 2.00. Certainly, the designated power index may alternatively be any one of a numerical indicator, a symbol indicator, or a text indicator corresponding to another power index within the specified power index range. This is not limited herein.

In some implementations, the power style adjustment method may further include: displaying, on the power style adjustment interface, a driving mode indicator corresponding to a part of the power index indicators, wherein a preset driving mode indicated by the driving mode indicator corresponds to a designated power index indicated by the part of the power index indicators.

In some cases, a power output intensity or a power style indicated by any power index within the specified power index range may be described by using a corresponding driving mode.

In this implementation, after a power index indicator corresponding to the designated power index is displayed on the power style adjustment interface, to allow the user to adjust the power style of the vehicle more intuitively, the driving mode indicator corresponding to the part of the power index indicators may be displayed on the power style adjustment interface. The preset driving mode indicated by the driving mode indicator corresponds to the designated power index indicated by the part of the power index indicators.

For example, the preset driving mode may include three modes: a power saving mode, a standard mode, and a sport mode, namely, eco, normal, and sport. A minimum value, a median value, and a maximum value within the specified power index range may respectively correspond to the eco mode, the normal mode, and the sport mode. The specified power index range of 0.00 to 2.00 is used as an example. The plurality of designated power indexes, namely, 0.00, 0.20, 0.40, 0.60, 0.80, 1.00, 1.20, 1.40, 1.60, 1.80, 2.00 within the specified power index range of 0.00 to 2.00 may include a minimum value of 0.00, a median value of 1.00 and a maximum value of 2.00 that respectively correspond to the eco mode, the normal mode and the sport mode in the preset driving mode. Still referring to FIG. 3 to FIG. 11, the driving mode indicator corresponding to the part of the power index indicators may be displayed in the second area 340 of the power style adjustment interface 300. The preset driving mode indicated by the driving mode indicator includes the eco mode, the normal mode, and the sport mode. The designated power index indicated by the part of the power index indicators includes the minimum value of 0.00, the median value of 1.00, and the maximum value of 2.00.

In some implementations, the driving mode indicator may be indicated in any one of the following manners: a symbol indicator corresponding to the preset driving mode, and a text indicator corresponding to the preset driving mode. For example, still referring to FIG. 3 to FIG. 11, driving mode indicators "eco", "normal", and "sport" respectively corresponding to power index indicators "0.00", "1.00", and "2.00" may be displayed in the first area 340.

In some implementations, the power style adjustment method may further include: displaying adjustment indication information on the power style adjustment interface, wherein the adjustment indication information is used to guide a driver or the user to perform the power adjustment operation. Specifically, referring to FIG. 3 to FIG. 11, adjustment indication information "adjust based on a personal preference" may be displayed in the first area 340 of the power style adjustment interface 300. Certainly, the adjustment indication information may alternatively be other text information, symbol information, or picture information that can guide the driver or the user to perform the power adjustment operation. This is not limited herein.

In some implementations, the power style adjustment method may further include: displaying, in the second area, a current driving mode corresponding to the target power index.

In some cases, to more intuitively describe the current power output intensity or power style of the vehicle, the current driving mode corresponding to the target power index may be displayed on the power style adjustment interface.

In this implementation, the current driving mode corresponding to the current target power index may be displayed in the second area of the power style adjustment interface. Specifically, to facilitate understanding by a customer and adjustment of the power style, the current driving mode corresponding to the target power index may be determined based on the preset driving mode. The specified power index range of 0.00 to 2.00 is used as an example. A driving mode corresponding to any power index within the specified power index range of 0.00 to 2.00 is classified into an eco mode, an eco+ mode, a normal- mode, a normal mode, a normal+ mode, a sport- mode, and a sport mode based on the minimum value of 0.00 corresponding to the eco mode, a separating value of 0.50 between the minimum value of 0.00 corresponding to the eco mode and the median value of 1.00 corresponding to the normal mode, the median value of 1.00 corresponding to the normal mode, a separating value of 1.50 between the median value of 1.00 corresponding to the normal mode and the maximum value of 2.00 corresponding to the sport mode, and the maximum value of 2.00 corresponding to the sport mode. In other words, the target power index of 0.00 corresponds to the eco mode, a target power index greater than 0.00 and less than or equal to 0.50 corresponds to the eco+ mode, a target power index greater than 0.50 and less than 1.00 corresponds to the normal- mode, the target power index 1.00 corresponds to the normal mode, a target power index greater than 1.00 and less than 1.50 corresponds to the normal+ mode, a target power index greater than or equal to 1.50 and less than 2.00 corresponds to the sport- mode, and the target power index of 2.00 corresponds to the sport mode. For example, still referring to FIG. 4 to FIG. 11, the current driving mode, namely, the eco mode, the eco+ mode, the eco+ mode, the normal- mode, the normal mode, the normal+ mode, the sport- mode, and the sport mode that respectively correspond to the target power indexes 0.00, 0.10, 0.30, 0.80, 1.00, 1.20, 1.60, and 2.00 may be displayed in the second area 350.

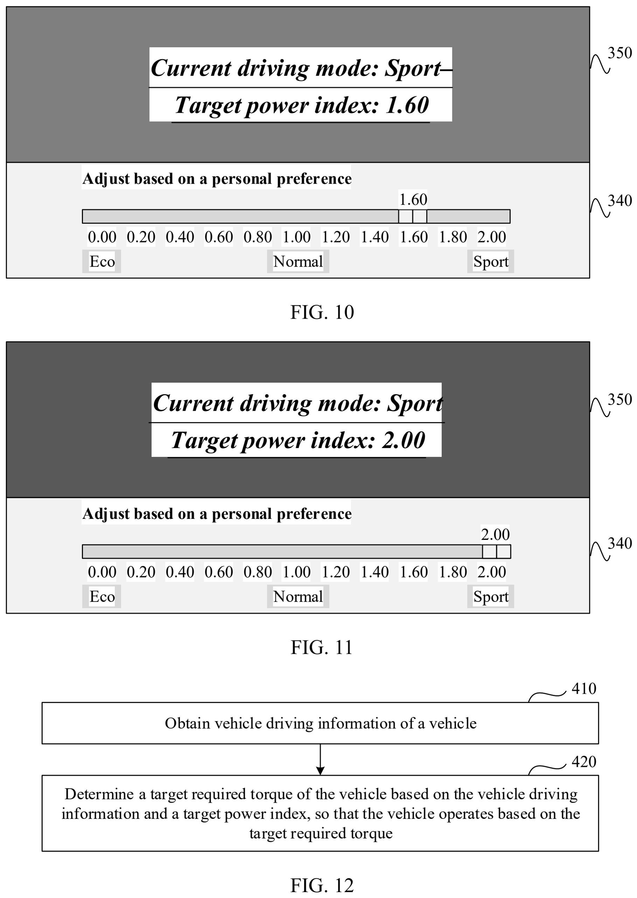

In some implementations, referring to FIG. 12, the power style adjustment method may further include the following steps.

Step S410: obtain vehicle driving information of the vehicle.

In some cases, the power style of the vehicle may be adjusted based on the target power index in combination with the vehicle driving information. The head unit may transmit the target power index determined in response to the power adjustment operation to a vehicle control unit of the vehicle through a CAN bus.

In this implementation, the vehicle control unit may obtain, through the CAN bus, the target power index sent by the head unit, and may obtain the vehicle driving information of the vehicle. The vehicle driving information may include a vehicle speed and a throttle opening. For example, the vehicle control unit may obtain a target power index sent by the head unit in a designated sending period. In an example, the designated sending period may be 10 ms to 200 ms, and preferably, may be 80 ms, 90 ms, 100 ms, 110 ms, or 120 ms.

Step S420: determine a target required torque of the vehicle based on the vehicle driving information and the target power index, so that the vehicle operates based on the target required torque.

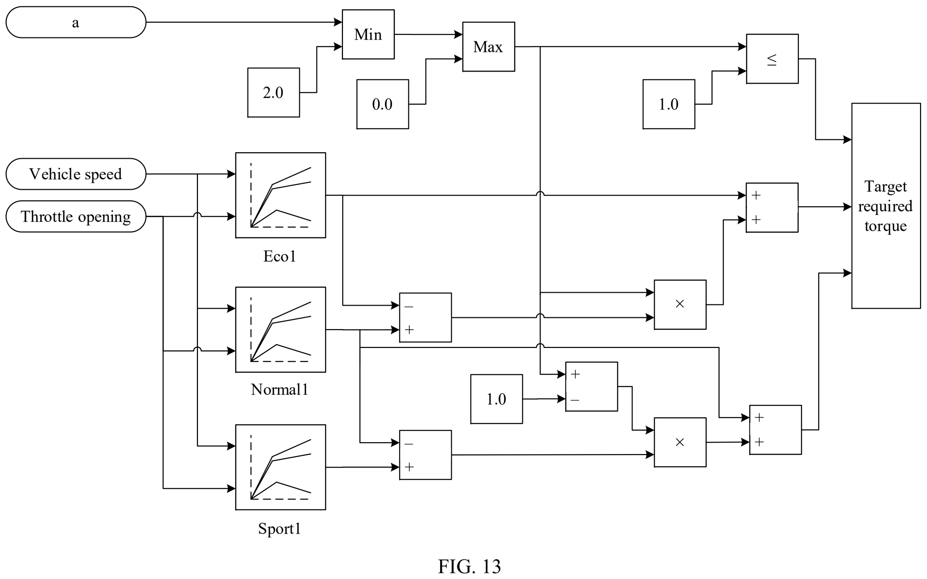

In this implementation, the vehicle control unit may determine the target required torque of the vehicle based on the vehicle driving information and the target power index. The target required torque may be a wheel-end required torque of the vehicle. Specifically, the target required torque may be determined based on the vehicle speed, the throttle opening, and the target power index. For example, referring to FIG. 13, 'a' in the figure indicates the obtained target power index, and the vehicle control unit may determine the obtained target power index a based on the specified power index range. The specified power index range of 0.0 to 2.0 is used as an example. If $0.0 \leq a \leq 2.0$, it indicates that the target required torque of the vehicle may be determined based on the target power index a. If a>2.0, a maximum value of 2.0 is used as the target power index a. If a<0.0, a minimum value of 0.0 is used as the target power index a.

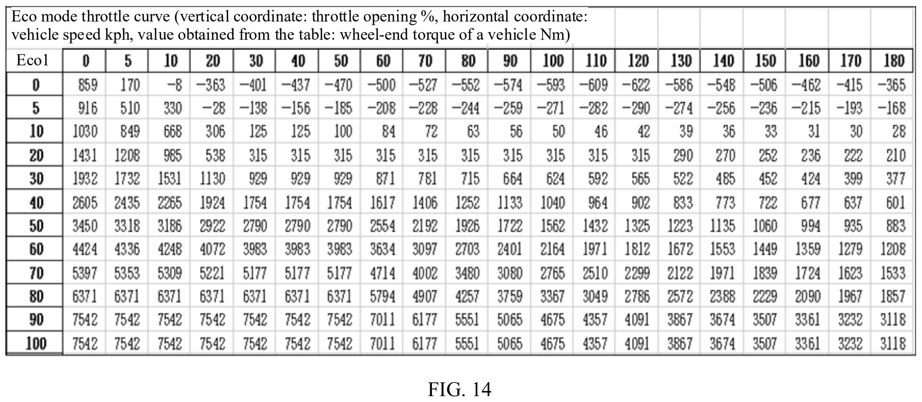

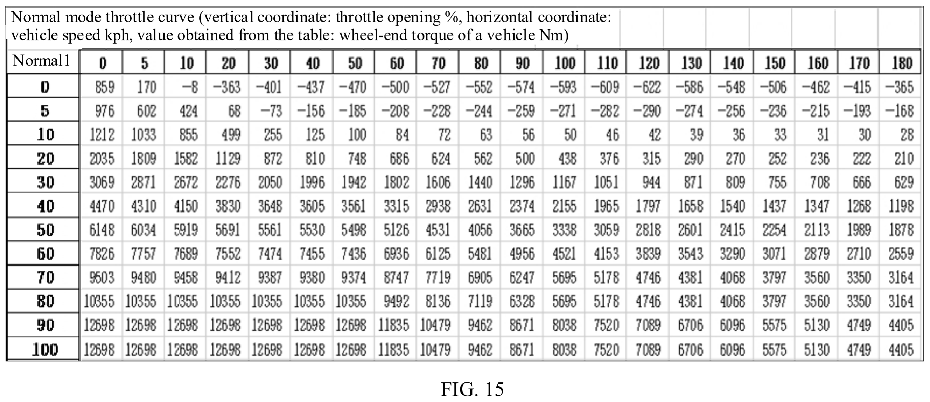

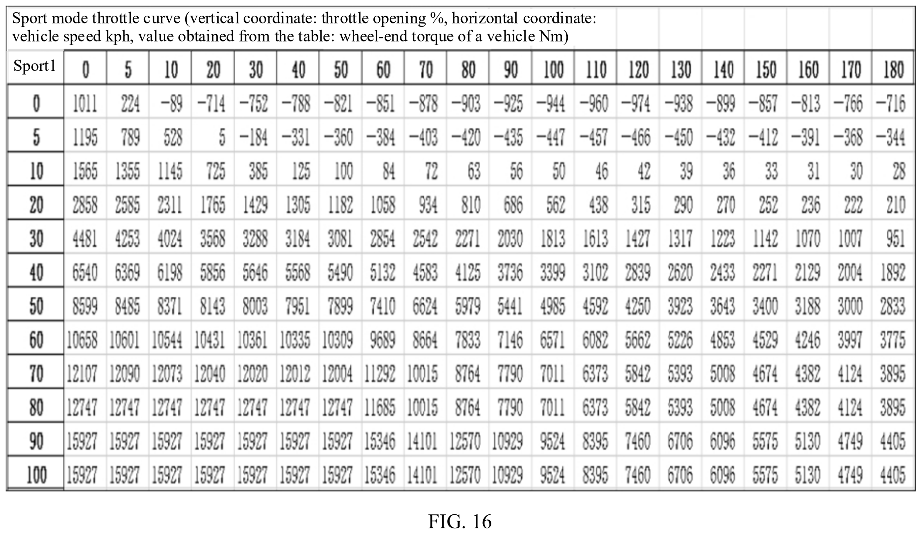

In this implementation, referring to FIG. 14 to FIG. 16, the vehicle control unit may store a plurality of throttle curve tables. For example, the plurality of throttle curve tables may include a power saving mode throttle curve table, a standard mode throttle curve table, a sport mode throttle curve table, namely, an eco mode throttle curve table eco1, a normal mode throttle curve table normal1, and a sport mode throttle curve table sport1. A horizontal coordinate of the throttle curve table indicates the vehicle speed, measured in kph, a vertical coordinate indicates the throttle opening, measured in %, and a value obtained from the table is a wheel-end torque of the vehicle, measured in Nm. For example, with a same vehicle speed and a same throttle opening, the throttle curve tables eco1, normal1, and sport1 may meet $eco1 \leq normal1 \leq sport1$, that is, with the same vehicle speed and the same throttle opening, a wheel-end torque of the vehicle determined based on the throttle curve table eco1 is not greater than a wheel-end torque of the vehicle determined based on the throttle curve table normal1, and the wheel-end torque of the vehicle determined based on the throttle curve table normal1 is not greater than a wheel-end torque of the vehicle determined based on the throttle curve table sport1.

In this implementation, the vehicle control unit may select a part from a plurality of throttle curve tables based on a preset value, and perform linear interpolation with reference to the vehicle speed and the throttle opening, to obtain the target required torque. Specifically, the specified power index range of 0.0 to 2.0 is still used as an example. The preset value may be a median value of 1.0 within the specified power index range of 0.0 to 2.0.

Specifically, still referring to FIG. 13, the vehicle control unit may determine the target power index based on the preset value, and if the target power index is less than or equal to the preset value, query the throttle curve table eco1 based on the vehicle speed and the throttle opening, to obtain a first required torque of the vehicle, query the throttle curve table normal1 based on the vehicle speed and the throttle opening, to obtain a second vehicle required torque, and then determine the target required torque of the vehicle based on the first vehicle required torque, the second vehicle required torque, and the target power index. For example, the target required torque may be determined based on Formula 1. In Formula 1, T indicates the target required torque, eco indicates the first vehicle required torque, normal indicates the second vehicle required torque, and a indicates the target power index.

$$T = Eco + (Normal - Eco) * a \qquad \text{Formula 1}$$

In an example, still referring to FIG. 13, a first difference between the second vehicle required torque and the first vehicle required torque that are determined by using a first arithmetic unit may be obtained, a first product of the first difference and the target power index may be determined by using a second arithmetic unit, a sum of the first product and the first vehicle required torque may be determined by using a third arithmetic unit, and the sum of the first product and the first vehicle required torque may be used as the target required torque.

Specifically, still referring to FIG. 13, if the target power index is greater than the preset value, the vehicle control unit queries the throttle curve table normal1 based on the vehicle speed and the throttle opening, to obtain the second vehicle required torque, queries the throttle curve table sport1 based on the vehicle speed and the throttle opening, to obtain a third vehicle required torque, and then determine the target required torque of the vehicle based on the second vehicle required torque, the third vehicle required torque, and the target power index. For example, the target required torque may be determined based on Formula 2. In Formula 2, 'T' indicates the target required torque, normal indicates the second vehicle required torque, sport indicates the third vehicle required torque, and a indicates the target power index.

$$T = Normal + (Sport - normal) * (a - 1) \qquad \text{Formula 2}$$

In an example, still referring to FIG. 13, a second difference between the third vehicle required torque and the second vehicle required torque that are determined by using a fourth arithmetic unit may be obtained, a third difference between the target power index and the preset value that are determined by using a fifth arithmetic unit may be obtained, a second product of the second difference and the third difference may be determined by using a sixth arithmetic unit, a sum of the second product and the second vehicle required torque may be determined by using a seventh arithmetic unit, and the sum of the second product and the second vehicle required torque may be used as the target required torque.

In some implementations, the vehicle control unit may perform any of the following operations on the target required torque: limiting, arbitration, filtering, distribution, and ratio conversion, to obtain a target required torque signal, and send the target required torque signal to a motor control unit through a CAN bus, so that the motor control unit may output a torque based on the target required torque signal. For example, the target required torque may be limited based on a current state of charge (SOC) of a battery, to limit excessive power style improvement or an excessive power output intensity, preventing battery depletion. For example, the target required torque may be arbitrated based on a braking signal, to prioritize braking. For example, the power style or the power output intensity may be prevented from changing too quickly through filtering, or a rate of increase in the power output intensity may be limited through filtering. For example, the target required torque may be distributed to obtain a plurality of required wheel-end torques, a plurality of required wheel-end torque signals are generated based on the plurality of required wheel-end torques, and the plurality of required wheel-end torque signals may be sent to corresponding motor control units, to indicate the corresponding motor control units to output torques.

An implementation of this specification provides a power style adjustment method, and the power style adjustment method may include the following steps.

Step S502: provides a power style adjustment interface.

Step S504: display a power adjustment control on the power style adjustment interface.

Step S506: determine target power information in response to a power adjustment operation on the power adjustment control, where the target power information indicates a power output intensity of a vehicle.

Specifically, the target power information includes: a target power index and/or a color indicator.

Specifically, the target power index is continuously adjustable within a specified power index range.

Specifically, a color depth and a color change of the color indicator correspond to a magnitude of the power output intensity.

Specifically, the power adjustment control is a sliding control, and a length of the sliding control corresponds to any power index within the specified power index range. The target power index may be determined in response to a touch operation on the sliding control.

Specifically, the power adjustment control includes a sliding bar and a slider, a position of the sliding bar in a length direction corresponds to a power index within the specified power index range, and the slider can point to any position of the sliding bar. The target power index may be determined in response to a relative movement operation between the sliding bar and the slider based on a position of the slider relative to the sliding bar.

Step S508: display the target power information through the power style adjustment interface.

Specifically, the target power index and/or the color indicator of the target power information may be displayed on the power style adjustment interface.

Specifically, the power style adjustment interface includes a first area and a second area. The power adjustment control may be displayed in the first area and the target power information may be displayed in the second area.

Specifically, different color indicators correspond to different target power indexes.

Specifically, as the target power index changes, a color indicator corresponding to a changed target power index is displayed in a gradient manner.

Specifically, a current driving mode corresponding to the target power index may be displayed in the second area.

Specifically, a power indicator indicating the specified power index range may be displayed on the power style adjustment interface. For example, the power indicator may be displayed in the first area.

Specifically, the power indicator indicating the specified power index range may be displayed in the first area.

Specifically, the power indicator includes a plurality of power index indicators; and the power index indicator is indicated in any one of the following manners: a numerical indicator corresponding to a designated power index; a symbol indicator corresponding to the designated power index; and a text indicator corresponding to the designated power index.

Specifically, a driving mode indicator corresponding to a part of the power index indicators may be displayed on the power style adjustment interface, where a preset driving mode indicated by the driving mode indicator corresponds to a designated power index indicated by the part of the power index indicators.

Specifically, the driving mode indicator is indicated in any one of the following manners: a symbol indicator corresponding to the preset driving mode, and a text indicator corresponding to the preset driving mode.

Specifically, adjustment indication information may be displayed on the power style adjustment interface, where the adjustment indication information is used to guide a driver to perform the power adjustment operation. For example, the adjustment indication information may be displayed in the first area.

Step S510: obtain vehicle driving information of the vehicle. The vehicle driving information includes a vehicle speed and a throttle opening.

Step S512: if the target power index is less than or equal to a preset value, determine a first vehicle required torque and a second vehicle required torque based on the vehicle speed and the throttle opening, wherein the second vehicle required torque is greater than or equal to the first vehicle required torque; obtain a first difference between the second vehicle required torque and the first vehicle required torque; determine a first product of the first difference and the target power index; and use a sum of the first product and the first vehicle required torque as the target required torque.

Step S514: if the target power index is greater than the preset value, determine a third vehicle required torque based on the vehicle speed and the throttle opening, wherein the third vehicle required torque is greater than or equal to the second vehicle required torque; obtain a second difference between the third vehicle required torque and the second vehicle required torque, and a third difference between the target power index and the preset value; determine a second product of the second difference and the third difference; and use a sum of the second product and the second vehicle required torque as the target required torque.

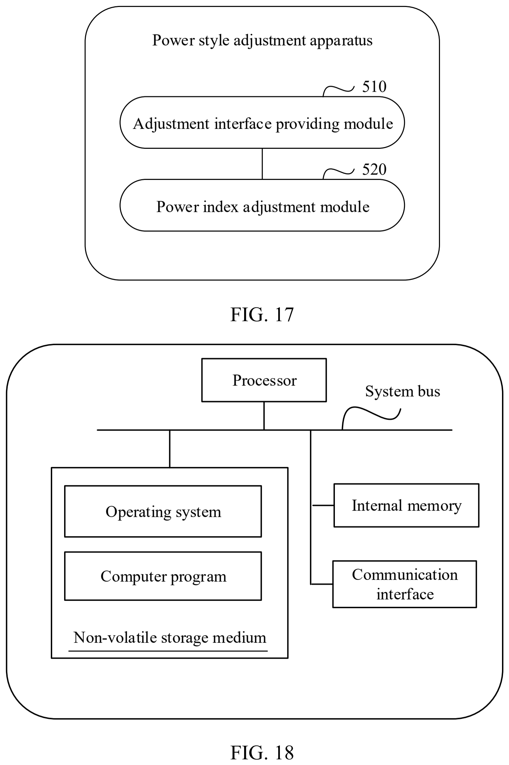

An implementation of this specification provides a power style adjustment apparatus. Referring to FIG. 17, the power style adjustment apparatus may include an adjustment interface providing module 510 and a power index adjustment module 520.

The adjustment interface providing module 510 is configured to provide a power style adjustment interface. The power index adjustment module 520 is configured to display a target power index on the power style adjustment interface in response to a power adjustment operation. The target power index is continuously adjustable within a specified power index range. The target power index indicates a power output intensity of a vehicle.

For specific functions and effect implemented by the power style adjustment apparatus, refer to corresponding explanations in other implementations in this specification. Details are not described herein again. All modules in the power style adjustment apparatus may be implemented through software, hardware, or a combination thereof. All the modules may be embedded in a hardware form within a processor of a computer device or exist independently, or may be stored in a software form within a memory of the computer device, so that the processor invokes and performs operations corresponding to the modules.

Referring to FIG. 18, in some implementations, a computer device may be provided, including a memory and a processor. The memory stores a computer program. When the computer program is executed by the processor, the power style adjustment method according to the foregoing implementations is implemented.

An implementation of this specification further provides a computer-readable storage medium. The computer-readable storage medium stores a computer program. When the computer program is executed by a processor, the power style adjustment method according to any one of the foregoing implementations is implemented.

An implementation of this specification further provides a computer program product including instructions. When the instructions are executed by a computer, the computer is enabled to perform the power style adjustment method according to any one of the foregoing implementations.

An embodiment provides a computer device. The computer device may be a terminal, and a diagram of an inner structure of the computer device may be shown in FIG. 18. The computer device includes a processor, a memory, and a communication interface that are connected through a system bus. The processor of the computer device is configured to provide computing and control capabilities. The memory of the computer device includes a non-volatile storage medium and an internal memory. The non-volatile storage medium stores an operating system and a computer program. The internal memory provides an environment for running the operating system and the computer program in the non-volatile storage medium. The communication interface of the computer device is configured to communicate with an external terminal in a wired or wireless manner. The wireless manner may be implemented through WI-FI, a carrier network, NFC (near field communication), or another technology. The computer program is executed by a processor to implement the power style adjustment method.

It will be understood that specific examples in the present disclosure are merely intended to help a person skilled in the art better understand the present disclosure, but are not intended to limit the scope of the present disclosure.

It will be understood that sequence numbers of the processes do not mean execution sequences in various implementations of the present disclosure. The execution sequences of the processes should be determined based on functions and internal logic of the processes, and should not be construed as any limitation on implementation processes of the present disclosure.

It will be understood that various implementations described in the present disclosure may be separately implemented or may be implemented in combination. This is not limited in the present disclosure.

Unless otherwise stated, all technical and scientific terms used in the present disclosure have same meanings as those usually understood by a person skilled in the art of the present disclosure. The terms used in the present disclosure are merely intended to describe specific implementations, and are not intended to limit the scope of the present disclosure. The term "and/or" used in the present disclosure includes any and all combinations of one or more related listed items. The terms "a", "the foregoing", and "the" of singular forms used in the present disclosure and the appended claims are also intended to include plural forms, unless otherwise specified in the context clearly.

It may be noted that the processor in the present disclosure may be an integrated circuit chip, and has a signal processing capability. In an implementation process, the steps in the foregoing method implementations may be completed by using an integrated logic circuit of hardware in the processor or instructions in a form of software. The processor may be a general-purpose processor, a digital signal processor (DSP), an application-specific integrated circuit (ASIC), a field programmable gate array (FPGA) or another programmable logic device, a discrete gate or transistor logic device, or a discrete hardware component. The processor may implement or perform the methods, the steps, and logical block diagrams that are disclosed in the present disclosure. The general-purpose processor may be a microprocessor, or any conventional processor. Steps of the methods disclosed with reference to the present disclosure may be directly performed and accomplished through a hardware decoding processor, or may be performed and accomplished by using a combination of hardware and software modules in the decoding processor. A software module may be located in a mature storage medium in the art, like a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It will be understood that the memory in the present disclosure may be a volatile memory or a non-volatile memory, or may include both a volatile memory and a non-volatile memory. The non-volatile memory may be read-only memory (ROM), a programmable read-only memory (programmable ROM, PROM), an erasable programmable read-only memory (erasable PROM, EPROM), an electrically erasable programmable read-only memory (EEPROM), or a flash memory. The volatile memory may be a random access memory (RAM). It should be noted that the memory of the systems and methods described in the present disclosure includes but is not limited to these and any memory of another proper type.

A person of ordinary skill in the art may be aware that, in combination with the examples described in implementations disclosed in the present disclosure, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present disclosure.

It will be clearly understood by a person skilled in the art that, for the purpose of convenient and brief description, for a detailed working process of the foregoing system, apparatus, and unit, refer to a corresponding process in the foregoing method implementations, and details are not described herein again.

The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

**Claims**

1. A power style adjustment method, wherein the method comprises:

   providing a power style adjustment interface, and displaying a power adjustment control on the power style adjustment interface; and displaying target power information through the power style adjustment interface in response to a power adjustment operation on the power adjustment control, wherein the target power information indicates a power output intensity of a vehicle.

2. The method according to claim 1, wherein the target power information comprises: a target power index and/or a color indicator.

3. The method according to claim 2, wherein the target power index is continuously adjustable within a specified power index range.

4. The method according to claim 2, wherein a color depth and a color change of the color indicator correspond to a magnitude of the power output intensity.

5. The method according to claim 3, wherein the power adjustment control is a sliding control, and a length of the sliding control corresponds to any power index within the specified power index range; and displaying target power information through the power style adjustment interface in response to the power adjustment operation on the power adjustment control comprises: displaying the target power index on the power style adjustment interface in response to a touch operation on the sliding control.

6. The method according to claim 3, wherein the power adjustment control comprises a sliding bar and a slider, a position of the sliding bar in a length direction corresponds to a power index within the specified power index range, and the slider is capable of pointing to any position of the sliding bar; and displaying target power information through the power style adjustment interface in response to the power adjustment operation on the power adjustment control comprises:

displaying the target power index on the power style adjustment interface in response to a relative movement operation between the sliding bar and the slider, wherein the target power index is determined based on a position of the slider relative to the sliding bar.

7. The method according to any one of claims 1 to 6, wherein the power style adjustment interface comprises a first area and a second area, and the method further comprises:

displaying the power adjustment control in the first area; and
displaying the target power information in the second area.

8. The method according to claim 2, wherein different color indicators correspond to different target power indexes.

9. The method according to claim 8, wherein the method further comprises:
as the target power index changes, displaying, in a gradient manner on the power style adjustment interface, a color indicator corresponding to a changed target power index.

10. The method according to claim 7, wherein the method further comprises:
displaying, in the second area, a current driving mode corresponding to the target power index.

11. The method according to claim 3, wherein the method further comprises:
displaying, on the power style adjustment interface, a power indicator indicating the specified power index range.

12. The method according to claim 11, wherein the power style adjustment interface comprises a first area; and displaying, on the power style adjustment interface, the power indicator indicating the specified power index range comprises:
displaying, in the first area, the power indicator indicating the specified power index range.

13. The method according to claim 11, wherein the power indicator comprises a plurality of power index indicators; and the power index indicator is indicated in any one of the following manners:

a numerical indicator corresponding to a designated power index;
a symbol indicator corresponding to the designated power index; and
a text indicator corresponding to the designated power index.

14. The method according to claim 13, wherein the method further comprises:
displaying, on the power style adjustment interface, a driving mode indicator corresponding to a part of the power index indicators, wherein a preset driving mode indicated by the driving mode indicator corresponds to a designated power index indicated by the part of the power index indicators.

15. The method according to claim 14, wherein the driving mode indicator is indicated in any one of the following manners:

a symbol indicator corresponding to the preset driving mode, and
a text indicator corresponding to the preset driving mode.

16. The method according to any one of claims 1 to 15, wherein the method further comprises:
displaying adjustment indication information on the power style adjustment interface, wherein the adjustment indication information is used to guide a driver to perform the power adjustment operation.

17. The method according to any one of claims 1 to 16, wherein the method further comprises:

obtaining vehicle driving information of the vehicle; and
determining a target required torque of the vehicle based on the vehicle driving information and the target power index, so that the vehicle operates based on the target required torque.

18. The method according to claim 17, wherein the vehicle driving information comprises a vehicle speed and a throttle opening; and
determining the target required torque of the vehicle based on the vehicle driving information and the target power index comprises:
determining the target required torque based on the vehicle speed, the throttle opening, and the target power index.

19. The method according to claim 18, wherein determining the target required torque based on the vehicle speed, the throttle opening, and the target power index comprises:

if the target power index is less than or equal to a preset value, determining a first vehicle required torque and a second vehicle required torque based on the vehicle speed and the throttle opening, wherein the second vehicle required torque is greater than or equal to the first vehicle required torque; and
determining the target required torque based on the first vehicle required torque, the second vehicle required torque, and the target power index.

20. The method according to claim 19, wherein determining the target required torque based on the first vehicle required torque, the second vehicle required torque, and the target power index comprises:

obtaining a first difference between the second vehicle required torque and the first vehicle required torque;
determining a first product of the first difference and the target power index; and
using a sum of the first product and the first vehicle required torque as the target required torque.

21. The method according to claim 19, wherein determining the target required torque based on the vehicle speed, the throttle opening, and the target power index further comprises:

if the target power index is greater than the preset value, determining a third vehicle required torque based on the vehicle speed and the throttle opening, wherein the third vehicle required torque is greater than or equal to the second vehicle required torque; and
determining the target required torque based on the second vehicle required torque, the third vehicle required torque, and the target power index.

22. The method according to claim 21, wherein determining the target required torque based on the second vehicle required torque, the third vehicle required torque, and the target power index further comprises:

obtaining a second difference between the third vehicle required torque and the second vehicle required torque, and a third difference between the target power index and the preset value;
determining a second product of the second difference and the third difference; and
using a sum of the second product and the second vehicle required torque as the target required torque.

23. A power style adjustment apparatus, wherein the apparatus comprises:

an adjustment interface providing module, configured to: provide a power style adjustment interface, and display a power adjustment control on the power style adjustment interface; and
a power index adjustment module, configured to display target power information through the power style adjustment interface in response to a power adjustment operation on the power adjustment control, wherein the target power information indicates a power output intensity of a vehicle.

24. A computer device, comprising a memory and a processor, wherein the memory stores a computer program, and when the computer program is executed by the processor, the power style adjustment method according to any one of claims 1 to 22 is implemented.

25. A computer-readable storage medium, wherein the computer-readable storage medium stores a computer program, and when the computer program is executed by a processor, the power style adjustment method according to any one of claims 1 to 22 is implemented.

~ 110 ~ 120 ~ 130

| Head unit | ⟷ | Vehicle control unit | → | Motor control unit |

FIG. 1

~ 210

Provide a power style adjustment interface, and display a power adjustment control on the power style adjustment interface

~ 220

Display target power information through the power style adjustment interface in response to a power adjustment operation on the power adjustment control, where the target power information may indicate a power output intensity of a vehicle

FIG. 2

~ 300

**_Target power index: 0.80_**

350

310                                                          311    340

0.00   0.20   0.40   0.60   0.80   1.00   1.20   1.40   1.60   1.80   2.00

FIG. 3

**300**

| |
|---|
| *Current driving mode: Eco–* |
| *Target power index: 0.00* |

**Adjust based on a personal preference**

0.00  330  320

0.00  0.20  0.40  0.60  0.80  1.00  1.20  1.40  1.60  1.80  2.00

Eco  Normal  Sport

**350**

**340**

FIG. 4

**300**

| |
|---|
| *Current driving mode: Eco* |
| *Target power index: 0.10* |

**Adjust based on a personal preference**

0.00  330  320

0.00  0.20  0.40  0.60  0.80  1.00  1.20  1.40  1.60  1.80  2.00

Eco  Normal  Sport

**350**

**340**

FIG. 5

**Current driving mode: Eco+**

**Target power index: 0.30**

350

**Adjust based on a personal preference**

0.30

0.00  0.20  0.40  0.60  0.80  1.00  1.20  1.40  1.60  1.80  2.00

Eco                                    Normal                        Sport

340

FIG. 6

**Current driving mode: Normal–**

**Target power index: 0.80**

350

**Adjust based on a personal preference**

0.80

0.00  0.20  0.40  0.60  0.80  1.00  1.20  1.40  1.60  1.80  2.00

Eco                                    Normal                        Sport

340

FIG. 7

**Current driving mode: Normal**

**Target power index: 1.00**

350

**Adjust based on a personal preference**

1.00

| 0.00 | 0.20 | 0.40 | 0.60 | 0.80 | 1.00 | 1.20 | 1.40 | 1.60 | 1.80 | 2.00 |

Eco          Normal          Sport

340

FIG. 8

**Current driving mode: Normal+**

**Target power index: 1.20**

350

**Adjust based on a personal preference**

1.20

| 0.00 | 0.20 | 0.40 | 0.60 | 0.80 | 1.00 | 1.20 | 1.40 | 1.60 | 1.80 | 2.00 |

Eco          Normal          Sport

340

FIG. 9

**Current driving mode: Sport—**

**Target power index: 1.60**

350

**Adjust based on a personal preference**

1.60

340

0.00  0.20  0.40  0.60  0.80  1.00  1.20  1.40  1.60  1.80  2.00

Eco                              Normal                              Sport

FIG. 10

**Current driving mode: Sport**

350

**Target power index: 2.00**

**Adjust based on a personal preference**

2.00

340

0.00  0.20  0.40  0.60  0.80  1.00  1.20  1.40  1.60  1.80  2.00

Eco                              Normal                              Sport

FIG. 11

410

Obtain vehicle driving information of a vehicle

420

Determine a target required torque of the vehicle based on the vehicle driving information and a target power index, so that the vehicle operates based on the target required torque

FIG. 12

FIG. 13

| Eco mode throttle curve (vertical coordinate: throttle opening %, horizontal coordinate: vehicle speed kph, value obtained from the table: wheel-end torque of a vehicle Nm) | | | | | | | | | | | | | | | | | | | |
|---|---|---|---|---|---|---|---|---|---|---|---|---|---|---|---|---|---|---|---|
| Eco1 | 0 | 5 | 10 | 20 | 30 | 40 | 50 | 60 | 70 | 80 | 90 | 100 | 110 | 120 | 130 | 140 | 150 | 160 | 170 | 180 |
| 0 | 859 | 170 | −8 | −363 | −401 | −437 | −470 | −500 | −527 | −552 | −574 | −593 | −609 | −622 | −586 | −548 | −506 | −462 | −415 | −365 |
| 5 | 916 | 510 | 330 | −28 | −138 | −156 | −185 | −208 | −228 | −244 | −259 | −271 | −282 | −290 | −274 | −256 | −236 | −215 | −193 | −168 |
| 10 | 1030 | 849 | 668 | 306 | 125 | 125 | 100 | 84 | 72 | 63 | 56 | 50 | 46 | 42 | 39 | 36 | 33 | 31 | 30 | 28 |
| 20 | 1431 | 1208 | 985 | 538 | 315 | 315 | 315 | 315 | 315 | 315 | 315 | 315 | 315 | 315 | 290 | 270 | 252 | 236 | 222 | 210 |
| 30 | 1932 | 1732 | 1531 | 1130 | 929 | 929 | 929 | 871 | 781 | 715 | 664 | 624 | 592 | 565 | 522 | 485 | 452 | 424 | 399 | 377 |
| 40 | 2605 | 2435 | 2265 | 1924 | 1754 | 1754 | 1754 | 1617 | 1406 | 1252 | 1133 | 1040 | 964 | 902 | 833 | 773 | 722 | 677 | 637 | 601 |
| 50 | 3450 | 3318 | 3186 | 2922 | 2790 | 2790 | 2790 | 2554 | 2192 | 1926 | 1722 | 1562 | 1432 | 1325 | 1223 | 1135 | 1060 | 994 | 935 | 883 |
| 60 | 4424 | 4336 | 4248 | 4072 | 3983 | 3983 | 3983 | 3634 | 3097 | 2703 | 2401 | 2164 | 1971 | 1812 | 1672 | 1553 | 1449 | 1359 | 1279 | 1208 |
| 70 | 5397 | 5353 | 5309 | 5221 | 5177 | 5177 | 5177 | 4714 | 4002 | 3480 | 3080 | 2765 | 2510 | 2299 | 2122 | 1971 | 1839 | 1724 | 1623 | 1533 |
| 80 | 6371 | 6371 | 6371 | 6371 | 6371 | 6371 | 6371 | 5794 | 4907 | 4257 | 3759 | 3367 | 3049 | 2786 | 2572 | 2388 | 2229 | 2090 | 1967 | 1857 |
| 90 | 7542 | 7542 | 7542 | 7542 | 7542 | 7542 | 7542 | 7011 | 6177 | 5551 | 5065 | 4675 | 4357 | 4091 | 3867 | 3674 | 3507 | 3361 | 3232 | 3118 |
| 100 | 7542 | 7542 | 7542 | 7542 | 7542 | 7542 | 7542 | 7011 | 6177 | 5551 | 5065 | 4675 | 4357 | 4091 | 3867 | 3674 | 3507 | 3361 | 3232 | 3118 |

FIG. 14

| Normal mode throttle curve (vertical coordinate: throttle opening %, horizontal coordinate: vehicle speed kph, value obtained from the table: wheel-end torque of a vehicle Nm) | | | | | | | | | | | | | | | | | | | |
|---|---|---|---|---|---|---|---|---|---|---|---|---|---|---|---|---|---|---|---|
| Normal1 | 0 | 5 | 10 | 20 | 30 | 40 | 50 | 60 | 70 | 80 | 90 | 100 | 110 | 120 | 130 | 140 | 150 | 160 | 170 | 180 |
| 0 | 859 | 170 | −8 | −363 | −401 | −437 | −470 | −500 | −527 | −552 | −574 | −593 | −609 | −622 | −586 | −548 | −506 | −462 | −415 | −365 |
| 5 | 976 | 602 | 424 | 68 | −73 | −156 | −185 | −208 | −228 | −244 | −259 | −271 | −282 | −290 | −274 | −256 | −236 | −215 | −193 | −168 |
| 10 | 1212 | 1033 | 855 | 499 | 255 | 125 | 100 | 84 | 72 | 63 | 56 | 50 | 46 | 42 | 39 | 36 | 33 | 31 | 30 | 28 |
| 20 | 2035 | 1809 | 1582 | 1129 | 872 | 810 | 748 | 686 | 624 | 562 | 500 | 438 | 376 | 315 | 290 | 270 | 252 | 236 | 222 | 210 |
| 30 | 3069 | 2871 | 2672 | 2276 | 2050 | 1996 | 1942 | 1802 | 1606 | 1440 | 1296 | 1167 | 1051 | 944 | 871 | 809 | 755 | 708 | 666 | 629 |
| 40 | 4470 | 4310 | 4150 | 3830 | 3648 | 3605 | 3561 | 3315 | 2938 | 2631 | 2374 | 2155 | 1965 | 1797 | 1658 | 1540 | 1437 | 1347 | 1268 | 1198 |
| 50 | 6148 | 6034 | 5919 | 5691 | 5561 | 5530 | 5498 | 5126 | 4531 | 4056 | 3665 | 3338 | 3059 | 2818 | 2601 | 2415 | 2254 | 2113 | 1989 | 1878 |
| 60 | 7826 | 7757 | 7689 | 7552 | 7474 | 7455 | 7436 | 6936 | 6125 | 5481 | 4956 | 4521 | 4153 | 3839 | 3543 | 3290 | 3071 | 2879 | 2710 | 2559 |
| 70 | 9503 | 9480 | 9458 | 9412 | 9387 | 9380 | 9374 | 8747 | 7719 | 6905 | 6247 | 5695 | 5178 | 4746 | 4381 | 4068 | 3797 | 3560 | 3350 | 3164 |
| 80 | 10355 | 10355 | 10355 | 10355 | 10355 | 10355 | 10355 | 9492 | 8136 | 7119 | 6328 | 5695 | 5178 | 4746 | 4381 | 4068 | 3797 | 3560 | 3350 | 3164 |
| 90 | 12698 | 12698 | 12698 | 12698 | 12698 | 12698 | 12698 | 11835 | 10479 | 9462 | 8671 | 8038 | 7520 | 7089 | 6706 | 6096 | 5575 | 5130 | 4749 | 4405 |
| 100 | 12698 | 12698 | 12698 | 12698 | 12698 | 12698 | 12698 | 11835 | 10479 | 9462 | 8671 | 8038 | 7520 | 7089 | 6706 | 6096 | 5575 | 5130 | 4749 | 4405 |

FIG. 15

| Sport mode throttle curve (vertical coordinate: throttle opening %, horizontal coordinate: vehicle speed kph, value obtained from the table: wheel-end torque of a vehicle Nm) | | | | | | | | | | | | | | | | | | | |
|---|---|---|---|---|---|---|---|---|---|---|---|---|---|---|---|---|---|---|---|
| Sport1 | 0 | 5 | 10 | 20 | 30 | 40 | 50 | 60 | 70 | 80 | 90 | 100 | 110 | 120 | 130 | 140 | 150 | 160 | 170 | 180 |
| 0 | 1011 | 224 | −89 | −714 | −752 | −788 | −821 | −851 | −878 | −903 | −925 | −944 | −960 | −974 | −938 | −899 | −857 | −813 | −766 | −716 |
| 5 | 1195 | 789 | 528 | 5 | −184 | −331 | −360 | −384 | −403 | −420 | −435 | −447 | −457 | −466 | −450 | −432 | −412 | −391 | −368 | −344 |
| 10 | 1565 | 1355 | 1145 | 725 | 385 | 125 | 100 | 84 | 72 | 63 | 56 | 50 | 46 | 42 | 39 | 36 | 33 | 31 | 30 | 28 |
| 20 | 2858 | 2585 | 2311 | 1765 | 1429 | 1305 | 1182 | 1058 | 934 | 810 | 686 | 562 | 438 | 315 | 290 | 270 | 252 | 236 | 222 | 210 |
| 30 | 4481 | 4253 | 4024 | 3568 | 3288 | 3184 | 3081 | 2854 | 2542 | 2271 | 2030 | 1813 | 1613 | 1427 | 1317 | 1223 | 1142 | 1070 | 1007 | 951 |
| 40 | 6540 | 6369 | 6198 | 5856 | 5646 | 5568 | 5490 | 5132 | 4583 | 4125 | 3736 | 3399 | 3102 | 2839 | 2620 | 2433 | 2271 | 2129 | 2004 | 1892 |
| 50 | 8599 | 8485 | 8371 | 8143 | 8003 | 7951 | 7899 | 7410 | 6624 | 5979 | 5441 | 4985 | 4592 | 4250 | 3923 | 3643 | 3400 | 3188 | 3000 | 2833 |
| 60 | 10658 | 10601 | 10544 | 10431 | 10361 | 10335 | 10309 | 9689 | 8664 | 7833 | 7146 | 6571 | 6082 | 5662 | 5226 | 4853 | 4529 | 4246 | 3997 | 3775 |
| 70 | 12107 | 12090 | 12073 | 12040 | 12020 | 12012 | 12004 | 11292 | 10015 | 8764 | 7790 | 7011 | 6373 | 5842 | 5393 | 5008 | 4674 | 4382 | 4124 | 3895 |
| 80 | 12747 | 12747 | 12747 | 12747 | 12747 | 12747 | 12747 | 11685 | 10015 | 8764 | 7790 | 7011 | 6373 | 5842 | 5393 | 5008 | 4674 | 4382 | 4124 | 3895 |
| 90 | 15927 | 15927 | 15927 | 15927 | 15927 | 15927 | 15927 | 15346 | 14101 | 12570 | 10929 | 9524 | 8395 | 7460 | 6706 | 6096 | 5575 | 5130 | 4749 | 4405 |
| 100 | 15927 | 15927 | 15927 | 15927 | 15927 | 15927 | 15927 | 15346 | 14101 | 12570 | 10929 | 9524 | 8395 | 7460 | 6706 | 6096 | 5575 | 5130 | 4749 | 4405 |

FIG. 16

Power style adjustment apparatus

~ 510

Adjustment interface providing module

~ 520

Power index adjustment module

FIG. 17

Processor

System bus

Operating system

Internal memory

Computer program

Communication interface

Non-volatile storage medium

FIG. 18

## INTERNATIONAL SEARCH REPORT

| International application No. |
|---|
| **PCT/CN2024/085799** |

| A. | CLASSIFICATION OF SUBJECT MATTER |
|---|---|
| | B60W50/14(2020.01)i; B60W50/08(2020.01)i |

According to International Patent Classification (IPC) or to both national classification and IPC

| B. | FIELDS SEARCHED |
|---|---|

Minimum documentation searched (classification system followed by classification symbols)

  IPC:B60W

Documentation searched other than minimum documentation to the extent that such documents are included in the fields searched

Electronic data base consulted during the international search (name of data base and, where practicable, search terms used)

  CNTXT, ENTXTC, DWPI, CNKI: 动力, 风格, 模式, 选择, 调节, 界面, 显示, power, mode+, adjust+, screen, display+

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 113247011 A (CHINA FAW CO., LTD.) 13 August 2021 (2021-08-13)<br>  description, paragraphs [0031]-[0110], and figures 1A-4 | 1-25 |
| X | CN 111469679 A (SHANGHAI YUANCHENG AUTOMOBILE TECHNOLOGY CO., LTD.)<br>31 July 2020 (2020-07-31)<br>  description, paragraphs [0026]-[0074], and figures 1-6 | 1-25 |
| X | CN 112145666 A (GUANGZHOU XIAOPENG MOTORS TECHNOLOGY CO., LTD.) 29<br>December 2020 (2020-12-29)<br>  description, paragraphs [0030]-[0129], and figures 1-11 | 1-25 |
| X | CN 113844277 A (JIANGLING MOTORS CO., LTD.) 28 December 2021 (2021-12-28)<br>  description paragraphs [0048]-[0115], and figures 1A-2 | 1-25 |
| X | CN 115742995 A (SAILISI GROUP CO., LTD.) 07 March 2023 (2023-03-07)<br>  description, paragraphs [0040]-[0083], and figures 1-7 | 1-25 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **16 July 2024** | **28 July 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/085799**

| Patent document cited in search report | | | Publication date (day/month/year) | Patent family member(s) | Publication date (day/month/year) |
|---|---|---|---|---|---|
| CN | 113247011 | A | 13 August 2021 | None | |
| CN | 111469679 | A | 31 July 2020 | None | |
| CN | 112145666 | A | 29 December 2020 | None | |
| CN | 113844277 | A | 28 December 2021 | None | |
| CN | 115742995 | A | 07 March 2023 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023108697249